# FASCICULE DE BREVET EUROPEEN

(11) **EP 3 369 889 B1**
(45) Date de publication et mention de la délivrance du brevet: **28.08.2019**
(21) Numéro de dépôt: 18305144.0
(22) Date de dépôt: 12.02.2018
(51) Int. Cl.: E21B 17/08, F16L 37/107

(54) **PROCEDE POUR FAIRE EVOLUER UN CONNECTEUR ASSEMBLANT DEUX TRONCONS D'UNE COLONNE MONTANTE AU MOYEN D'UNE BAGUE DE VERROUILLAGE DEMONTABLE**
VERFAHREN ZUR WEITERENTWICKLUNG EINES STECKERS DURCH ZUSAMMENBAU VON ZWEI ABSCHNITTEN EINER STEIGLEITUNG MITHILFE EINES DEMONTIERBAREN VERSCHLUSSRINGS
METHOD FOR MOVING A CONNECTOR JOINING TWO SECTIONS OF A RISER BY MEANS OF A REMOVABLE LOCKING RING

(30) Priorité: 03.03.2017 FR 1751735
(43) Date de publication de la demande: 05.09.2018
(73) Titulaire: IFP Energies nouvelles, 92852 Rueil-Malmaison Cedex (FR)
(72) Inventeur: PERSENT, Emmanuel, 78290 CROISSY SUR SEINE (FR); ROGUET, Eleonore, 92500 RUEIL-MALMAISON (FR); TRIADOU, JEREMIE, 78955 CARRIERES SOUS POISSY (FR)
(74) Mandataire: IFP Energies nouvelles

(56) Documents cités:
- WO-A1-2009/140027
- WO-A1-2010/069863
- WO-A2-2015/071411
- CN-B- 102 168 529
- FR-A1- 2 866 942

## Description

La présente invention concerne le domaine du forage et de l'exploitation pétrolière de gisement en mer très profonde. Elle concerne un procédé de modification d'un connecteur de colonne montante.

Une colonne montante (ou « riser ») de forage est constituée par un ensemble d'éléments tubulaires de longueur comprise entre 15 et 27 m (50 et 90 feet), assemblés par des connecteurs. Les éléments tubulaires sont généralement constitués d'un tube principal muni de connecteurs à chaque extrémité. Des conduites auxiliaires tubulaires dites également conduites périphériques couramment nommée "kill line", "choke line", "booster line" et "hydraulic line" permettant la circulation de fluides techniques sont prévues parallèlement au tube principal. Les éléments tubulaires sont assemblés sur le lieu de forage, à partir d'un support flottant. La colonne descend dans la tranche d'eau au fur et à mesure de l'assemblage des éléments tubulaires, jusqu'à atteindre la tête de puits située sur le fond marin.

Dans l'optique de forer à des profondeurs d'eau pouvant atteindre 3500 m ou plus, le poids de la colonne montante devient très pénalisant. Ce phénomène est aggravé par le fait que, pour une même pression maximale de service, la longueur de la colonne impose un diamètre intérieur des conduites auxiliaires plus grand compte tenu de la nécessité de limiter les pertes de charge.

Par ailleurs, la nécessité de diminuer le temps d'assemblage des colonnes montantes est d'autant plus critique que la profondeur d'eau, et donc la longueur de la colonne, sont importantes.

Pour répondre à ces besoins des connecteurs dits « rapides » ont été développés.

Classiquement, un connecteur « rapide » est formé d'un élément connecteur mâle, un élément connecteur femelle et d'une bague de verrouillage. L'élément connecteur mâle s'emboîte dans l'élément connecteur femelle pour connecteur les deux tronçons, et la bague de verrouillage assure le verrouillage de l'assemblage. Une conception répandue d'un tel connecteur est un connecteur, pour lequel la bague de verrouillage est externe : en d'autres termes à l'extérieur des éléments connecteurs mâle et femelle. D'un côté, la bague est montée sur l'élément connecteur mâle, en étant retenue par un épaulement, et de l'autre côté, la bague forme avec l'élément connecteur femelle un assemblage à baïonnette pouvant être déconnecté. La demande de brevet FR 2866942 (US 2005206163) décrit un exemple de connecteur pour assembler deux tronçons de colonne montante, avec une bague de verrouillage externe. Toutefois, en raison de l'épaulement qui retient la bague de verrouillage par rapport à l'élément connecteur mâle, la bague de verrouillage utilisée habituellement n'est pas démontable. Il n'est donc pas possible d'inspecter entièrement l'ensemble de la bague de verrouillage. De plus, du fait que la bague de verrouillage ne soit pas démontable, du matériel spécifique (lumière et miroirs) doit être utilisé pour inspecter les zones les plus sensibles.

D'autres conceptions de connecteurs « rapides » sont décrites dans les demandes de brevet FR 2925105 (US 2010319925), FR 2956693 (US 2011203804) et FR 2956694 (US 2013020087). Toutefois, la problématique de ces connecteurs reste l'inspection et la maintenance de la bague de verrouillage. En effet, les bagues de verrouillage dans les brevets précédemment cités ne sont pas entièrement démontables. Il n'est donc pas possible d'inspecter l'ensemble de la bague de verrouillage.

En outre, d'autres connecteurs « rapides » ont été décrits dans les demandes de brevet FR 3020655 (WO 2015/169560) et FR 3020654 (WO 2015/169559). Ces connecteurs sont démontables. Toutefois, afin de pouvoir les utiliser sur des sites de forage existants, il serait nécessaire de remplacer la totalité de la colonne montante, ce qui nécessite des investissements très importants. De plus, le remplacement de la totalité de la colonne montante est peu respectueux de l'environnement.

Une colonne montante (ou « riser ») pour les autres applications, notamment la production, le conditionnement (de l'anglais « completion ») ou pour le reconditionnement (de l'anglais « work-over »), est également constituée par un ensemble d'éléments tubulaires assemblés par des connecteurs, pour lesquels se pose la problématique de l'inspection.

Afin de pallier ces inconvénients, la présente invention concerne un procédé pour faire évoluer un connecteur d'une colonne montante existante, en découpant l'élément connecteur mâle ou la bague de verrouillage, puis en remplaçant la bague de verrouillage par une bague de verrouillage démontable. Ainsi, il est possible de former un connecteur pouvant être inspecté à partir d'un connecteur non démontable. De cette manière, un contrôle complet du connecteur est rendu possible. De plus, le procédé selon l'invention permet de réutiliser une colonne montante déjà existante, ce qui permet de limiter les investissements.

### Le procédé selon l'invention

L'invention concerne un procédé pour faire évoluer un connecteur assemblant deux tronçons d'une colonne montante de forage, ledit connecteur comprenant un premier tronçon de colonne montante, un deuxième tronçon de colonne montante, une bague de verrouillage non démontable, ledit premier tronçon de colonne montante étant formé par au moins un élément de tube principal prolongé par un élément connecteur mâle, ledit deuxième tronçon étant formé par au moins un élément de tube principal prolongé par un élément connecteur femelle, ledit élément connecteur mâle coopérant avec ledit élément connecteur femelle pour assembler lesdits deux tronçons, ladite bague de verrouillage étant disposée autour desdits éléments connecteurs mâle et femelle. Pour ce procédé, on réalise au moins les étapes suivantes, au moyen d'une bague de verrouillage de remplacement démontable, ladite bague de verrouillage de remplacement comportant une pluralité de tenons, lesdits tenons de ladite bague de verrouillage de remplacement coopérant avec une pluralité de tenons de l'élément connecteur mâle, ou ladite bague de verrouillage de remplacement étant formée par un assemblage vissé ou fileté d'au moins deux anneaux :
a) on découpe au moins un élément parmi ledit élément connecteur mâle et/ou ladite bague de verrouillage, de manière à séparer ledit élément connecteur mâle de ladite bague de verrouillage ; et
b) on remplace au moins ladite bague de verrouillage par ladite bague de verrouillage de remplacement.

Selon un mode de réalisation de l'invention, en outre, on remplace ledit élément connecteur mâle dudit connecteur par un élément connecteur mâle de remplacement comportant une série de tenons sur sa surface extérieure.

Avantageusement, on réalise les étapes suivantes :
i) on positionne l'élément connecteur mâle de remplacement par rapport audit élément connecteur femelle ; et
ii) on fixe ledit élément connecteur mâle de remplacement audit élément de tube principal.

De préférence, préalablement à la fixation dudit élément connecteur mâle de remplacement audit tube principal, on chanfreine ledit élément de tube principal.

Conformément à une mise en oeuvre de l'invention, on forme au moins une série de tenons sur la surface extérieure dudit élément connecteur mâle.

De manière avantageuse, on forme au moins une série de tenons par usinage d'un épaulement dudit élément connecteur mâle).

De plus, on peut former au moins une série de tenons par ajout de matière ou apport de tenons sur ledit élément connecteur mâle.

Conformément à un mode de réalisation, lorsque ladite bague de verrouillage de remplacement est formée par un assemblage de deux anneaux, on met en oeuvre les étapes suivantes :
i) on met en contact un épaulement d'un premier anneau avec un épaulement dudit élément connecteur mâle ; et
ii) on assemble lesdits anneaux par vissage ou filetage.

Selon une option de réalisation, on usine l'extrémité dudit élément connecteur femelle afin d'obtenir une surface plane à ladite extrémité dudit élément connecteur femelle.

Selon un mode de réalisation de l'invention, lesdits éléments connecteurs mâle et femelle sont munis de moyens de guidage pour le passage respectif d'un premier et d'un deuxième élément de tube auxiliaire, et lesdits premier et deuxième éléments de tube auxiliaire étant connectés entre eux par des moyens de connexion, et ledit procédé comporte une étape de démontage et de remplacement desdits moyens de connexion desdits tubes auxiliaires.

Avantageusement, on applique un traitement de surface sur ledit élément connecteur mâle et/ou sur ledit élément connecteur femelle et/ou sur ladite bague de verrouillage de remplacement.

Conformément à une caractéristique, ledit procédé comporte une étape initiale de désassemblage d'au moins un équipement desdits tronçons de colonne montante, tels qu'un flotteur, un tube auxiliaire, un collier de maintien, ou une plaque guide.

Selon une mise en oeuvre, ledit procédé comporte une étape finale d'assemblage d'au moins un équipement desdits tronçons de colonne montante, tels qu'un flotteur, un tube auxiliaire, un collier de maintien, ou une plaque guide.

### Présentation succincte des figures

D'autres caractéristiques et avantages du procédé selon l'invention, apparaîtront à la lecture de la description ci-après d'exemples non limitatifs de réalisations, en se référant aux figures annexées et décrites ci-après.
La figure 1 schématise une colonne montante selon l'invention.
La figure 2 illustre un connecteur selon l'art antérieur.
La figure 3 illustre un connecteur pouvant être obtenu selon un mode de réalisation du procédé.
La figure 4 illustre un élément connecteur mâle pouvant être utilisé pour un mode de réalisation du procédé.
La figure 5 illustre une vue en coupe d'une bague de verrouillage pouvant être utilisée pour un mode de réalisation du procédé.
La figure 6 illustre les étapes du procédé selon un mode de réalisation de l'invention.
Les figures 7 à 10 illustrent des connecteurs pouvant être obtenus par différents modes de réalisation du procédé.

### Description détaillée de l'invention

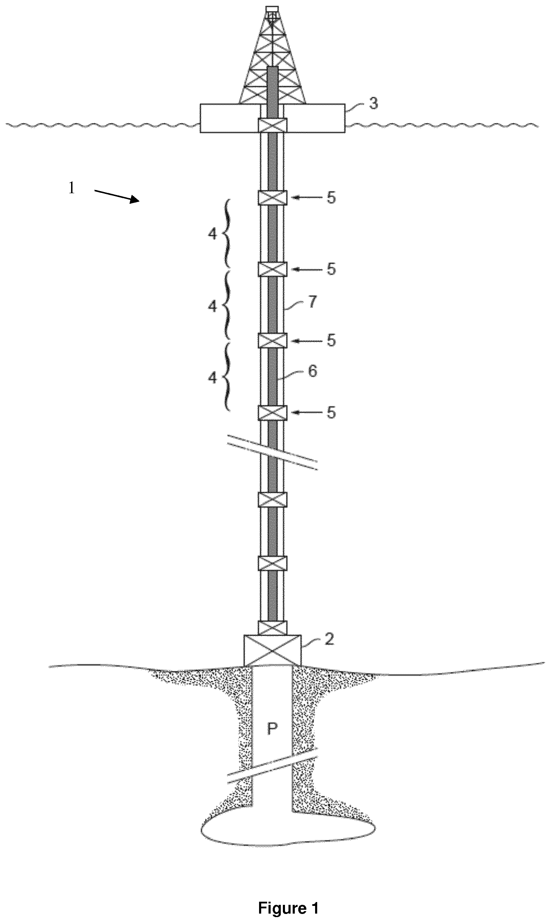

Selon un exemple de réalisation non limitatif, la figure 1 schématise une colonne montante 1 de forage installée en mer. La colonne montante 1 prolonge le puits P et s'étend depuis la tête de puits 2 jusqu'à un support flottant 3, par exemple une plateforme ou un bateau. La tête de puits 2 est munie d'obturateur couramment nommé "B.O.P." ou "Blow Out Preventer". La colonne montante 1 est constituée par l'assemblage de plusieurs tronçons 4 assemblés bout à bout par des connecteurs 5. Chaque tronçon est composé d'un élément de tube principal 6 muni d'au moins un élément de conduite auxiliaire 7, également appelée conduite périphérique. Les conduites auxiliaires dénommées "kill line" ou "choke line" sont utilisées pour assurer la sécurité du puits pendant le déroulement des procédures de contrôle des venues de fluides sous pression dans le puits. La ligne "choke" est une ligne de sécurité véhiculant des fluides (huile, eau, gaz) en provenance du puits lors d'une venue et les dirigeant vers le manifold de duses et la torche. La ligne "kill" est une ligne de sécurité qui permet d'injecter dans le puits des fluides lourds et des ciments permettant de stopper une éruption incontrôlable autrement. La conduite auxiliaire dénommée "booster line" permet d'injecter de la boue dans le puits afin d'augmenter sa vitesse de remontée et d'éviter la sédimentation des déblais ; elle sert aussi pour remplacer la boue contenue dans le riser par de l'eau avant une déconnexion. La conduite dénommée "hydraulic line" permet de commander l'obturateur de la tête de puits. Les lignes hydrauliques permettent d'alimenter les organes de sécurité des BOP (vannes et accumulateurs) en fluide hydraulique (eau distillée chargée en glycol) sous pression.

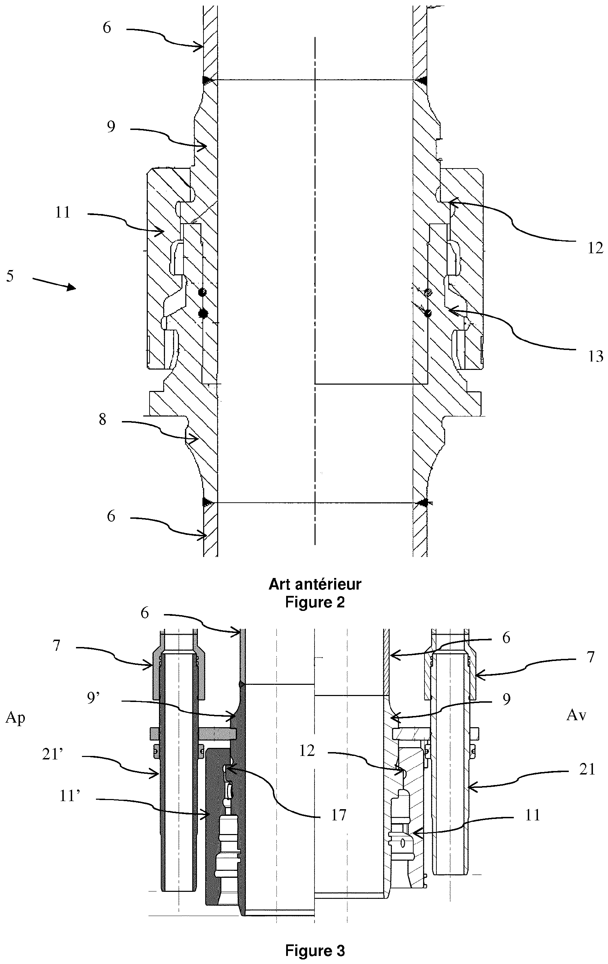

La figure 2 représente schématiquement un connecteur 5 selon un exemple de l'art antérieur. Sur cette figure, les éventuelles conduites auxiliaires ne sont pas représentées. Le connecteur 5 est constitué de deux éléments désignés, en référence à la figure 2, par l'élément connecteur femelle 8 et l'élément connecteur mâle 9. Les éléments connecteurs 8 et 9 sont montés aux extrémités de l'élément de tube principal 6. L'élément connecteur femelle 8 est solidaire du tube 6, par exemple au moyen d'un soudage, d'un vissage, d'un sertissage ou d'une liaison par coincement. L'élément connecteur mâle 9 est solidaire du tube 6, par exemple au moyen d'un soudage, d'un vissage, d'un sertissage ou d'une liaison par coincement. L'élément connecteur mâle d'un tronçon est destiné à être inséré dans un élément connecteur femelle d'un tronçon adjacent de la colonne montante. Pour cet exemple de l'art antérieur illustré, l'assemblage de l'élément connecteur mâle 9 avec un élément connecteur femelle 8 d'un autre tronçon forme le connecteur 5 qui transmet des efforts d'un tronçon de colonne montante au tronçon suivant, notamment les efforts longitudinaux auxquels est soumise la colonne montante. Le connecteur 5 comporte en outre une bague de verrouillage 11 disposée autour des éléments de tube principal 6. La bague de verrouillage 11 permet le verrouillage des éléments connecteurs mâle 9 et femelle 8. La bague de verrouillage 11 est en butée axiale par rapport à l'élément connecteur mâle 9 au moyen d'un épaulement 12. En outre, la surface intérieure de la bague de verrouillage comporte une série (dans le cas illustré la série comporte deux rangées) de tenons, qui coopère avec une série de tenons 13 (série de deux rangées) disposés sur la surface extérieure de l'élément connecteur femelle 8. Les séries de tenons de la bague de verrouillage 11 et de l'élément connecteur femelle 8 forment un assemblage démontable dit « à baïonnette ». Au contraire, l'assemblage de la bague de verrouillage 11 avec l'élément connecteur mâle 9 peut être non démontable, en raison de l'épaulement 12, notamment si l'élément connecteur mâle 9 est soudé au tube principal 6. Ce caractère non démontable ne permet pas une inspection complète de la bague de verrouillage 11, ni de l'élément connecteur mâle 9 lors de la maintenance du connecteur 5.

La présente invention a pour objectif de rendre un connecteur existant inspectable (c'est-à-dire qui peut être inspecté). Pour cela, la présente invention concerne un procédé pour faire évoluer un connecteur pour assembler deux tronçons de colonne montante. Le connecteur initial peut être tel que celui décrit en relation avec la figure 2. Toutefois, le procédé selon l'invention est adapté à tout connecteur avec une bague de verrouillage externe. Le procédé selon l'invention prévoit le remplacement d'une bague de verrouillage non démontable par une bague de verrouillage de remplacement démontable au moyen des étapes suivantes :
- on découpe du connecteur existant l'élément connecteur mâle et/ou la bague de verrouillage, pour séparer l'élément connecteur mâle de la bague de verrouillage ; cette étape entraîne la destruction de la pièce découpée,
- au sein du connecteur, on remplace au moins la bague de verrouillage par une bague de verrouillage de remplacement, la bague de verrouillage de remplacement comportant une série de tenons apte à coopérer avec une série de tenons de l'élément connecteur mâle, ou la bague de verrouillage de remplacement étant formée par un assemblage vissé ou fileté de deux anneaux.

Avantageusement, les étapes du procédé selon l'invention sont réalisées à la surface, et non en mer.

Selon une mise en oeuvre de l'invention, la découpe du connecteur existant peut être mise en oeuvre par un outil de coupe orbitale de forte épaisseur, tel que celui commercialisé par la société COFIM. Cette mise en oeuvre n'est pas limitative, la découpe pouvant être réalisée par tout moyen analogue.

Pour le mode de réalisation pour lequel la bague de verrouillage comporte une série de tenons coopérant avec une série de tenons de l'élément connecteur mâle, le caractère démontable est apporté par la connexion « à baïonnette » formée par ces séries de tenons. Ainsi, la bague de verrouillage peut être démontée par une combinaison de mouvements de rotation et de translation de la bague de verrouillage par rapport à l'élément connecteur mâle. La bague de verrouillage et l'élément connecteur mâle peuvent donc être complètement inspectés.

Pour ce mode de réalisation, l'élément connecteur mâle peut être adapté à la bague de verrouillage soit par remplacement de l'élément connecteur mâle, soit par modification de l'élément connecteur mâle.

Selon une première mise en oeuvre de ce mode de réalisation, pour le remplacement de l'élément connecteur mâle, on peut mettre en oeuvre les étapes suivantes :
- on découpe l'élément connecteur mâle du tube principal,
- on positionne l'élément connecteur mâle de remplacement par rapport à l'élément connecteur femelle, de manière à ce que la série de tenons des deux connexions « à baïonnette » soient alignés avec la série de tenons de la bague de verrouillage, et
- on fixe l'élément connecteur mâle de remplacement au tube principal, par exemple par soudage, sertissage, vissage à l'endroit de la découpe de l'élément connecteur mâle initial.

Cette mise en oeuvre peut comprendre une étape facultative de chanfreinage de l'extrémité du tube principal, cette étape étant réalisée avant l'étape de fixation de l'élément connecteur mâle de remplacement. Ce chanfrein permet de faciliter l'étape de soudage de l'élément connecteur mâle de remplacement sur le tube principal.

Selon une deuxième mise en oeuvre de ce mode de réalisation, la modification de l'élément connecteur mâle peut consister à former au moins une série de tenons sur la surface extérieure de l'élément connecteur mâle.

Conformément à une option de réalisation, on peut former au moins une série de tenons par usinage d'un épaulement de l'élément connecteur mâle.

Alternativement ou en outre, on peut former au moins une série de tenons par ajout de matière ou par apport de tenons.

Pour le mode de réalisation pour lequel la bague de verrouillage est formée de deux anneaux assemblés par vissage ou filetage, le caractère démontable est apporté par le vissage ou le filetage des deux anneaux entre eux. Ainsi, les deux anneaux peuvent être séparés et inspectés. Dans ce cas, un premier anneau peut servir de butée avec l'élément connecteur mâle, et le deuxième anneau peut servir de connexion avec l'élément connecteur femelle, le deuxième anneau comportant une série de tenons apte à coopérer avec la série de tenons de l'élément connecteur femelle.

Pour ce mode de réalisation, l'élément connecteur mâle n'a pas besoin d'être remplacé ou modifié.

Pour ce mode de réalisation, on peut mettre en oeuvre les étapes suivantes :
- on met en contact un épaulement d'un premier anneau avec un épaulement de l'élément connecteur mâle,
- on assemble les deux anneaux par vissage ou filetage.

Après les étapes du procédé selon l'invention, on obtient un connecteur adapté à une colonne montante de forage, par exemple telle que décrite en relation avec la figure 1, mais le connecteur selon l'invention peut également être adapté à une colonne montante de conditionnement (de l'anglais « completion »), de reconditionnement (de l'anglais « work-over ») ou de production, qui possède notamment la particularité de ne pas avoir de conduite auxiliaire.

Selon l'invention, le connecteur modifié comprend :
- un premier élément de tube principal prolongé par un élément connecteur mâle, celui-ci peut être éventuellement muni de moyens de guidage (par exemple une bride mâle ou une plaque guide) pour le passage d'un élément de tube auxiliaire (cas où la colonne montante comporte au moins une ligne auxiliaire),
- un deuxième élément de tube principal prolongé par un élément connecteur femelle, celui-ci peut être éventuellement muni de moyens de guidage (par exemple une bride femelle ou une plaque de guidage) pour le passage d'un élément de tube auxiliaire (cas où la colonne montante comporte au moins une ligne auxiliaire), l'élément connecteur mâle s'emboitant dans l'élément connecteur femelle pour connecter les éléments de tube principal et les éléments de tube auxiliaire,
- éventuellement, un premier élément de tube auxiliaire passant dans les moyens de de guidage de l'élément connecteur mâle,
- éventuellement, un deuxième élément de tube auxiliaire passant dans les moyens de guidage de l'élément connecteur femelle, et
- des moyens de verrouillage de l'assemblage comprenant une bague de verrouillage située à l'extérieur des éléments connecteurs mâle et femelle, dite bague de verrouillage externe, la bague de verrouillage étant :
   ∘ soit une bague de verrouillage comprenant, sur sa face intérieure, une première série et une deuxième série de tenons aptes à coopérer avec une troisième série et une quatrième série de tenons disposées respectivement sur des surfaces intérieures des éléments connecteurs mâle et femelle,
   ∘ soit une bague de verrouillage formée de deux anneaux assemblés par vissage ou filetage.

De préférence, la bague de verrouillage de remplacement peut être réalisée en une seule pièce.

En outre, les moyens de verrouillage peuvent comprendre des pions démontables agencés dans la bague de verrouillage et coopérant avec l'élément connecteur mâle pour bloquer la bague de verrouillage en translation.

Le connecteur peut être conçu et dimensionné pour satisfaire les spécifications mentionnées par les normes API 16 R et API 2RD éditées par l'American Petroleum Institute (Institut Américain du Pétrole).

La figure 3 illustre un connecteur pouvant être obtenu par un mode de réalisation du procédé selon l'invention. Sur cette figure, l'élément connecteur femelle n'est pas représenté. La partie droite (Av) illustre le connecteur initial (avant les étapes du procédé selon l'invention) selon un exemple, et la partie gauche (Ap) illustre le connecteur obtenu après les étapes du procédé selon un mode de réalisation.

Le connecteur initial (Av) est sensiblement identique à celui illustré en figure 2. Le connecteur comprend un élément connecteur mâle 9 fixé à une extrémité de tube principal 6. Le connecteur comprend également une bague de verrouillage 11. La bague de verrouillage 11 est en butée sur un épaulement 12 de l'élément connecteur mâle 9. De l'autre côté, la bague de verrouillage 11 comporte au moins une série de tenons pour former une connexion à baïonnette avec l'élément connecteur femelle. L'élément connecteur mâle 9 comporte en outre des moyens de guidage pour le passage d'un élément de tube auxiliaire 7. Un embout 21 est inséré dans l'extrémité de l'élément de tube auxiliaire 7. L'autre extrémité de l'embout 21 est destinée à être insérée dans l'extrémité de l'élément de tube auxiliaire passant par les moyens de guidage (non représentés) de l'élément connecteur femelle. L'embout 21 permet la connexion entre deux éléments de tube auxiliaire consécutifs.

Le connecteur modifié (Ap) comprend un élément connecteur mâle de remplacement 9' fixé à une extrémité de tube principal 6. L'élément connecteur mâle de remplacement 9' comporte au moins une série de tenons 17 sur sa surface extérieure. Le connecteur comprend également une bague de verrouillage de remplacement 11'. La bague de verrouillage de remplacement 11' comporte au moins une série de tenons sur sa surface intérieure, cette série de tenons étant aptes à coopérer avec la série de tenons 17 de l'élément connecteur mâle de remplacement 9'. Ainsi, une connexion à baïonnette est formée entre la bague de verrouillage de remplacement 11' et l'élément connecteur mâle de remplacement 9'. De l'autre côté, la bague de verrouillage de remplacement 11' comporte au moins une série de tenons pour former une connexion à baïonnette avec l'élément connecteur femelle. L'élément connecteur mâle de remplacement 9' comporte en outre des moyens de guidage pour le passage d'un élément de tube auxiliaire 7. Un embout de remplacement 21' est inséré dans l'extrémité de l'élément de tube auxiliaire 7. L'autre extrémité de l'embout de remplacement 21' est destinée à être insérée dans l'extrémité de l'élément de tube auxiliaire passant par les moyens de guidage (non représentés) de l'élément connecteur femelle. L'embout de remplacement 21' permet la connexion entre deux éléments de tube auxiliaire consécutifs. Comme illustré sur la figure 3, l'élément connecteur mâle de remplacement 9' peut être plus long que l'élément connecteur mâle initial 9 (afin de réaliser une série de tenons sur l'élément connecteur mâle de dimensions similaires aux tenons de l'élément connecteur femelle). Dans ce cas, l'embout de remplacement 21' peut être plus long que l'embout 21 initial.

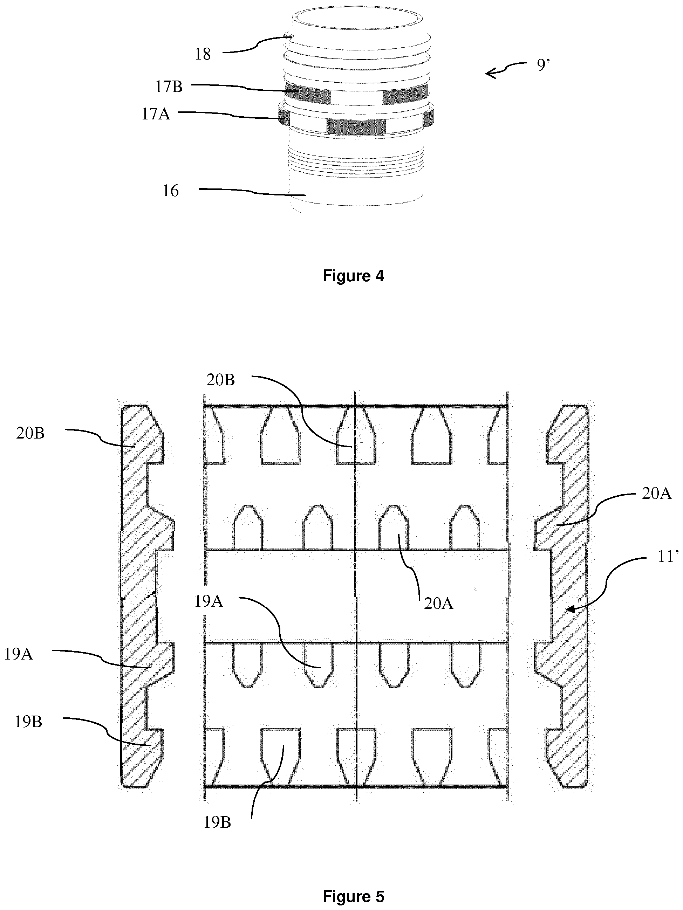

La figure 4 illustre un exemple d'élément connecteur mâle de remplacement 9' pouvant être utilisé pour un mode de réalisation de l'invention (par exemple le mode de réalisation de la figure 3) pour lequel on remplace l'élément connecteur mâle. L'élément connecteur mâle de remplacement 9' est une pièce sensiblement cylindrique, comprenant une première extrémité 18, destinée à être fixée à un élément de tube principal. De plus, l'élément connecteur mâle de remplacement 9' comporte une deuxième extrémité 16 destinée à être insérée dans l'élément connecteur femelle. L'élément connecteur mâle de remplacement 9' comprend, sur sa face extérieure, une série de tenons constituée de deux rangées de tenons 17A et 17B. La rangée 17A est la rangée la plus au centre du connecteur. Selon le mode de réalisation illustré, chaque rangée de tenons 17A, 17B comprend quatre tenons ayant une plage angulaire de 45°. Les deux rangées de tenons 17A, 17B sont inscrits dans des diamètres différents. De cette manière, l'insertion et le verrouillage dans la bague de verrouillage (et de manière inversée le déverrouillage et le retrait) sont permis par une unique translation. De plus, les répartitions circonférentielles des tenons des rangées 17A, 17B sont alternées : les tenons de la rangée 17A font face aux (sont alignés avec) intervalles entre deux tenons de la rangée 17B et inversement.

La figure 5 illustre, de manière non limitative, une bague de verrouillage de remplacement 11' pour un mode de réalisation de l'invention (par exemple le mode de réalisation de la figure 3). La figure 5 est une vue en coupe de la bague de verrouillage. La bague de verrouillage de remplacement 11' est une pièce sensiblement cylindrique. La bague de verrouillage de remplacement 11' comporte, sur sa surface intérieure, une première série de tenons 19 et une deuxième série de tenons 20. La première série de tenons 19 est apte à coopérer avec la série de tenons de l'élément connecteur mâle de remplacement. La deuxième série de tenons 20 est apte à coopérer avec la série de tenons de l'élément connecteur femelle. Selon le mode de réalisation illustré, chaque série de tenons 19, 20 comprend deux rangées de tenons 19A, 19B et 20A, 20B. Les rangées 19A et 20A sont les rangées de tenons les plus au centre. Chaque rangée de tenons comporte quatre tenons ayant une plage angulaire de 45°. Sur l'exemple illustré, les tenons des rangées de tenons centrales 19A, 20A sont inscrits dans des diamètres inférieurs aux diamètres des rangées de tenons externes 19B, 20B. De plus, les répartitions circonférentielles des tenons des rangées 19A, 19B sont alternées : les tenons de la rangée 19A font face aux (sont alignés avec) intervalles entre deux tenons de la rangée 19B et inversement. De la même manière, les répartitions circonférentielles des tenons des rangées 20A, 20B sont alternées : les tenons de la rangée 20A font face aux (sont alignés avec) intervalles entre deux tenons de la rangée 20B et inversement. En outre, pour le mode de réalisation illustré, les répartitions circonférentielles des tenons des première et troisième séries sont symétriques par rapport à un plan radial situé entre les première et troisième séries de tenons : les tenons de la rangée 19A font face (sont alignés avec) aux tenons de la rangée 20A, et les tenons de la rangée 19B font face (sont alignés avec) aux tenons de la rangée 20B.

Les différents modes de réalisation décrits précédemment et ci-après peuvent être combinés, de manière à combiner leurs effets.

De préférence, avant les étapes du procédé selon l'invention, l'élément connecteur femelle est déconnecté de la bague de verrouillage. Ainsi, chaque tronçon de colonne montante peut être modifié indépendamment des autres tronçons.

En outre, après les étapes du procédé selon l'invention, les tronçons de la colonne montante peuvent être connectés entre eux, au moyen des bagues de verrouillage de remplacement.

De plus, les tronçons de la colonne montante modifiés par le procédé selon l'invention peuvent être également connectés à des tronçons selon l'art antérieur. Par exemple un tronçon avec un élément connecteur mâle et une bague de verrouillage modifiés peut être connecté à un tronçon selon l'art antérieur avec un élément femelle selon l'art antérieur.

Pour le procédé selon l'invention, l'élément connecteur femelle n'est pas structurellement modifié. Ainsi, le coût et le temps de modification du connecteur peuvent être limités.

Toutefois, conformément à une mise en oeuvre de l'invention, le procédé selon l'invention peut comprendre une étape de modification légère de l'élément connecteur femelle, qui peut consister en une étape d'usinage de l'extrémité de l'élément connecteur femelle pour obtenir une surface plane à l'extrémité de l'élément connecteur femelle. En effet, l'extrémité de l'élément connecteur femelle peut être inclinée, ce qui limite la surface de contact entre les pièces du connecteur, ce qui peut être limitant pour la transmission des efforts. Cette étape d'usinage peut être réalisée avec un outillage dédié qui peut se positionner sur une surface de référence de l'élément femelle, par exemple un épaulement de l'élément connecteur femelle. Cet outillage dédié peut comprendre une fraise déportée dont l'avance de l'outil peut être contrôlée pour assurer une bonne coaxialité. Alternativement, pour réaliser cette étape d'usinage, on peut utiliser un outil de coupe orbitale de forte épaisseur, tel que celui commercialisé par la société COFIM (France).

Selon une option de réalisation de l'invention, lorsque la colonne montante comprend des conduites auxiliaires, les éléments de conduite auxiliaire étant connectés par des moyens de connexion, le procédé selon l'invention peut comprendre une étape de remplacement des moyens de connexion des conduites auxiliaires. Cette étape permet d'adapter la longueur des moyens de connexion des conduites auxiliaires à la longueur de l'élément connecteur mâle. En effet, l'élément connecteur mâle de remplacement peut être plus long que l'élément connecteur mâle initial.

Par exemple, les moyens de connexion des conduites auxiliaires peuvent comprendre un embout (« stab » en anglais) qui pénètre dans les extrémités des éléments de tube auxiliaire pour assurer leur connexion. Dans ce cas, le remplacement des moyens de connexion peut consister au remplacement de l'embout. L'embout de remplacement peut être un embout plus long que l'embout initial des moyens de connexion, de manière à s'adapter à la longueur de l'élément connecteur mâle de remplacement.

Avantageusement, pour favoriser le glissement des pièces les unes par rapport aux autres et pour éviter la corrosion, en particulier pour les tenons, on peut appliquer un traitement de surface, par exemple un traitement anticorrosion ou revêtement d'une surface de glissement, sur l'élément connecteur mâle et/ou sur l'élément connecteur femelle et/ou sur la bague de verrouillage de remplacement.

Selon un exemple de réalisation, l'application d'un traitement de protection contre la corrosion de type phosphatation peut consister à plonger la pièce dans un bain chaud de phosphate de zinc par exemple. De plus, des revêtements de lubrifiant solide à base de disulfure de molybdène peuvent être utilisés pour favoriser le glissement entre deux surfaces de contact. Ce revêtement consiste à appliquer deux couches de polymère de type Molykote ® /Xylan ®/Everslik ® polymérisées à chaud.

Une colonne montante est généralement pourvue d'équipements tels que des flotteurs, des conduites auxiliaires, des colliers de maintien, des plaques guides. Ces équipements sont généralement indépendants du connecteur.

Dans ce cas, le procédé selon l'invention peut comprendre une étape initiale (c'est-à-dire avant l'étape de découpe) de désassemblage de ces équipements. Ainsi, il est plus aisé de manoeuvrer les tronçons de la colonne montante, et de réaliser les étapes de découpe et de remplacement de la bague de verrouillage. De préférence, on réalise le désassemblage dans cet ordre : les flotteurs, les colliers de maintien, les conduites auxiliaires et les plaques guides.

En outre, le procédé selon l'invention peut comprendre une étape finale (c'est-à-dire après l'étape de remplacement de la bague de verrouillage) d'assemblage de ces équipements. De préférence, on réalise l'assemblage dans cet ordre : les plaques guides, les conduites auxiliaires, les colliers de maintien, et les flotteurs.

De préférence, les équipements de la colonne montante ne sont pas modifiés par le procédé selon l'invention. Ainsi, la modification du connecteur concerne au plus : l'élément connecteur mâle, l'élément connecteur femelle, et la bague de verrouillage, ce qui limite les dépenses et le temps de modification du connecteur, et ce qui permet de réutiliser un maximum d'éléments de la colonne montante.

Avantageusement, chaque série de tenons peut comporter une ou plusieurs rangées de tenons, de préférence une, deux ou trois rangées de tenons.

De manière avantageuse, chaque rangée de tenons peut comporter une pluralité de tenons uniformément réparties sur la circonférence de la bague de verrouillage ou de l'élément connecteur mâle ou femelle. Selon des exemples de mise en oeuvre, chaque rangée de tenons peut comprendre entre 3 et 8 tenons, par exemple 4 ou 6.

Dans la suite de la description, plusieurs modes de réalisation du procédé vont être présentés de manière non limitative. Ces modes de réalisation combinent les différentes étapes précédemment présentées

### Premier mode de réalisation

Pour ce premier mode de réalisation, on remplace la bague de verrouillage, l'élément connecteur mâle, et les moyens de connexion des conduites auxiliaires, et on modifie l'élément connecteur femelle.

Ce mode de réalisation présente l'avantage d'obtenir le connecteur le plus robuste en termes de transmission des efforts, car les tenons de l'élément connecteur mâle peuvent être sensiblement identiques aux tenons de l'élément connecteur femelle.

Pour ce mode de réalisation, on peut mettre en oeuvre les étapes suivantes :
- on désassemble les équipements prévus sur la colonne montante, tels que les flotteurs, les lignes périphériques, les colliers de maintien et les plaques guides :à la fin de cette étape, le tronçon de colonne montante comporte uniquement le tube principal, les éléments connecteurs mâle et femelle, et la bague de verrouillage montée sur l'élément connecteur mâle,
- on découpe l'élément connecteur mâle : à la fin de cette étape, le tronçon de la colonne montante comporte uniquement le tube principal et l'élément connecteur femelle,
- on réalise un chanfrein dans l'extrémité du tube principal pour préparer la soudure de l'élément connecteur mâle de remplacement,
- on positionne (en fonction de la position de l'élément connecteur femelle) et on fixe, par soudure, l'élément connecteur mâle de remplacement sur l'extrémité du tube principal ; l'élément connecteur mâle de remplacement comporte au moins une série de tenons sur sa surface extérieure : à la fin de cette étape, le tronçon comporte le tube principal, l'élément connecteur femelle et l'élément connecteur mâle de remplacement,
- on usine l'extrémité de l'élément connecteur femelle afin d'obtenir une surface plane à l'extrémité de l'élément connecteur femelle,
- on applique un traitement de surface à l'élément connecteur femelle, par exemple un traitement anti-corrosion et un revêtement de surface de glissement,
- on assemble les plaques guides sur les éléments connecteurs mâle et femelle,
- on positionne la bague de verrouillage de remplacement sur l'élément connecteur mâle de remplacement ; la bague de verrouillage de remplacement comporte au moins une série de tenons sur sa surface intérieure qui coopère avec la série de tenons sur l'élément connecteur mâle de remplacement ; à la fin de cette étape, le tronçon comporte le tube principal, l'élément connecteur femelle usiné, l'élément connecteur mâle de remplacement, les plaques guides et la bague de verrouillage de remplacement,
- on assemble les lignes périphériques avec les embouts de remplacement au moyen notamment des plaques guides, et
- on assemble les colliers de maintien et les flotteurs autour du tube principal et des lignes périphériques : à la fin de cette étape, le tronçon de colonne montante modifié est complet et peut être connecté à un autre tronçon de colonne montante au moyen de la bague de verrouillage de remplacement.

Ainsi, la bague de verrouillage de remplacement étant démontable par deux connexions à baïonnette, l'inspection complète du connecteur est rendue possible. En effet, il est possible d'inspecter la bague de verrouillage et les éléments connecteurs mâle et femelle.

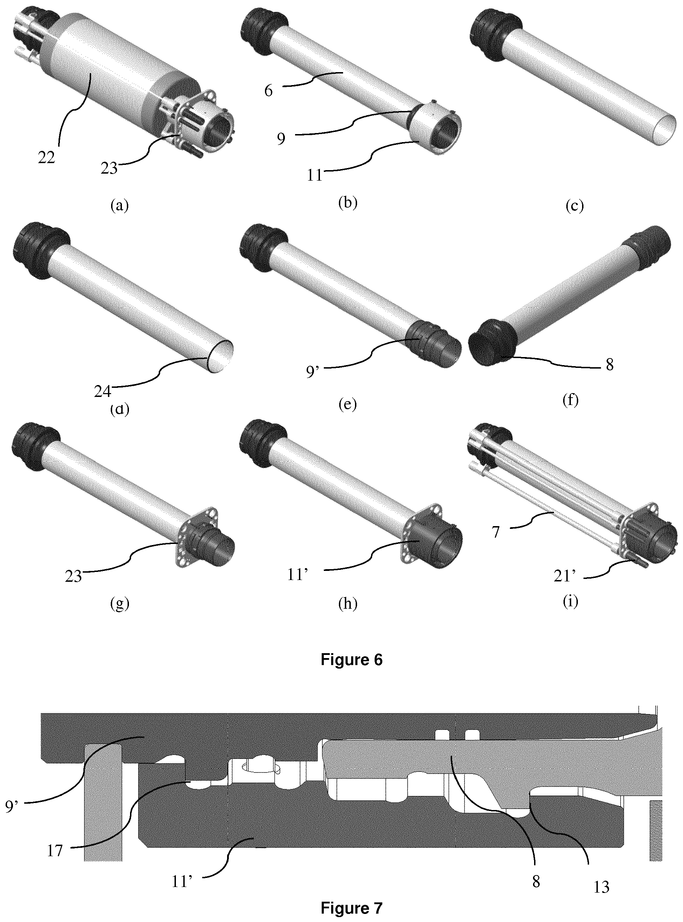

Les figures 6 (a) à (i) illustrent, schématiquement et de manière non limitative, le résultat de chacune des étapes de ce premier mode de réalisation pour un tronçon de colonne montante.

La figure (a) illustre le tronçon avant modification, avec notamment, le connecteur, le flotteur 22, les lignes périphériques et les plaques guides 23.

La figure (b) illustre le tronçon dépourvu de ces équipements (flotteur, lignes périphériques, plaques guides). Le tronçon comprend alors le tube principal 6, l'élément connecteur femelle, l'élément connecteur mâle 9 et la bague de verrouillage 11.

La figure (c) illustre le tronçon après la découpe de l'élément connecteur mâle. Le tronçon comporte alors le tube principal et l'élément connecteur femelle.

La figure (d) illustre le tronçon après réalisation du chanfrein 24 à l'extrémité du tube principal.

La figure (e) illustre le tronçon après positionnement et soudure de l'élément connecteur mâle de remplacement 9' à l'extrémité du tube principal. Pour ce mode de réalisation, l'élément connecteur mâle de remplacement 9' comporte deux rangées de tenons sur sa face extérieure.

La figure (f) illustre le tronçon après usinage de l'élément connecteur femelle 8, de façon à obtenir une surface plane pour l'extrémité de l'élément connecteur femelle 8.

La figure (g) illustre le tronçon après assemblage de la plaque guide 23.

La figure (h) illustre le tronçon après assemblage de la bague de verrouillage de remplacement 11' sur l'élément connecteur mâle de remplacement 9'.

La figure (i) illustre le tronçon après assemblage des lignes périphériques 7 avec l'embout de remplacement 21'.

### Deuxième mode de réalisation

Pour ce deuxième mode de réalisation, on remplace la bague de verrouillage, l'élément connecteur mâle, et les moyens de connexion des conduites auxiliaires. Par rapport au premier mode de réalisation, on ne réalise pas l'étape d'usinage de l'extrémité de l'élément connecteur femelle, dans un souci de simplification des opérations, ou pour les cas où l'élément connecteur femelle dispose déjà d'une surface plane à son extrémité.

Pour ce mode de réalisation, la rotation de la bague de verrouillage de remplacement peut s'effectuer sur une surface inclinée de la partie supérieure femelle.

Pour ce mode de réalisation, on peut mettre en oeuvre les étapes suivantes :
- on désassemble les équipements prévus sur la colonne montante, tels que les flotteurs, les lignes périphériques, les colliers de maintien et les plaques guides : à la fin de cette étape, le tronçon de colonne montante comporte uniquement le tube principal, les éléments connecteurs mâle et femelle, et la bague de verrouillage montée sur l'élément connecteur mâle,
- on découpe l'élément connecteur mâle : à la fin de cette étape, le tronçon de la colonne montante comporte uniquement le tube principal et l'élément connecteur femelle,
- on réalise un chanfrein dans l'extrémité du tube principal pour préparer la soudure de l'élément connecteur mâle de remplacement,
- on positionne (en fonction de la position de l'élément connecteur femelle) et on fixe, par soudure, l'élément connecteur mâle de remplacement sur l'extrémité du tube principal ; l'élément connecteur mâle de remplacement comporte au moins une série de tenons sur sa surface extérieure : à la fin de cette étape, le tronçon comporte le tube principal, l'élément connecteur femelle et l'élément connecteur mâle de remplacement,
- on assemble les plaques guides sur les éléments connecteurs mâle et femelle,
- on positionne la bague de verrouillage de remplacement sur l'élément connecteur mâle de remplacement ; la bague de verrouillage de remplacement comporte au moins une série de tenons sur sa surface intérieure qui coopère avec la série de tenons sur l'élément connecteur mâle de remplacement ; à la fin de cette étape, le tronçon comporte le tube principal, l'élément connecteur femelle, l'élément connecteur mâle de remplacement, les plaques guides et la bague de verrouillage de remplacement,
- on assemble les lignes périphériques avec les embouts de remplacement au moyen notamment des plaques guides, et
- on assemble les colliers de maintien et les flotteurs autour du tube principal et des lignes périphériques : à la fin de cette étape, le tronçon de colonne montante modifié est complet et peut être connecté à un autre tronçon de colonne montante au moyen de la bague de verrouillage de remplacement.

Ainsi, la bague de verrouillage de remplacement étant démontable par deux connexions à baïonnette, l'inspection complète du connecteur est rendue possible. En effet, il est possible d'inspecter la bague de verrouillage et les éléments connecteurs mâle et femelle.

Les étapes de ce mode de réalisation correspondent aux étapes illustrées aux figures 6 (a) à (e) et (g) à (i).

### Troisième mode de réalisation

Pour ce troisième mode de réalisation, on remplace la bague de verrouillage et l'élément connecteur mâle. Par rapport au premier mode de réalisation, on ne réalise pas l'étape d'usinage de l'extrémité de l'élément connecteur femelle, dans un souci de simplification des opérations, ou pour les cas où l'élément connecteur femelle dispose déjà d'une surface plane à son extrémité. En outre, par rapport au premier mode de réalisation, on ne remplace pas l'embout des moyens de connexion des lignes périphériques.

Pour ce mode de réalisation, la rotation de la bague de verrouillage de remplacement peut s'effectuer sur une surface inclinée de la partie supérieure femelle.

De plus, afin de ne pas modifier la longueur de l'élément connecteur mâle de remplacement par rapport à l'élément connecteur mâle initial, les séries de tenons de l'élément connecteur mâle de remplacement sont de longueur axiale (selon l'axe de la conduite montante) réduite par rapport à la longueur axiale des tenons de l'élément connecteur femelle. Ainsi, la série de tenons comprend un encombrement similaire à l'encombrement des épaulements de l'élément connecteur mâle initial. Il n'est donc pas utile de remplacer les embouts des lignes auxiliaires.

Le troisième mode de réalisation présente donc l'avantage de limiter le nombre de pièces à remplacer.

Pour ce mode de réalisation, on peut mettre en oeuvre les étapes suivantes :
- on désassemble les équipements prévus sur la colonne montante, tels que les flotteurs, les lignes périphériques, les colliers de maintien et les plaques guides : à la fin de cette étape, le tronçon de colonne montante comporte uniquement le tube principal, les éléments connecteurs mâle et femelle, et la bague de verrouillage montée sur l'élément connecteur mâle,
- on découpe l'élément connecteur mâle : à la fin de cette étape, le tronçon de la colonne montante comporte uniquement le tube principal et l'élément connecteur femelle,
- on réalise un chanfrein dans l'extrémité du tube principal pour préparer la soudure de l'élément connecteur mâle de remplacement,
- on positionne (en fonction de la position de l'élément connecteur femelle) et on fixe, par soudure, l'élément connecteur mâle de remplacement sur l'extrémité du tube principal ; l'élément connecteur mâle de remplacement comporte au moins une série de tenons sur sa surface extérieure ; à la fin de cette étape, le tronçon comporte le tube principal, l'élément connecteur femelle et l'élément connecteur mâle de remplacement,
- on assemble les plaques guides sur les éléments connecteurs mâle et femelle,
- on positionne la bague de verrouillage de remplacement sur l'élément connecteur mâle de remplacement ; la bague de verrouillage de remplacement comporte au moins une série de tenons sur sa surface intérieure qui coopère avec la série de tenons sur l'élément connecteur mâle de remplacement ; à la fin de cette étape, le tronçon comporte le tube principal, l'élément connecteur femelle, l'élément connecteur mâle de remplacement, les plaques guides et la bague de verrouillage de remplacement,
- on assemble les lignes périphériques avec les embouts initiaux au moyen notamment des plaques guides, et
- on assemble les colliers de maintien et les flotteurs autour du tube principal et des lignes périphériques : à la fin de cette étape, le tronçon de colonne montante modifié est complet et peut être connecté à un autre tronçon de colonne montante au moyen de la bague de verrouillage de remplacement.

En outre, la bague de verrouillage de remplacement étant démontable par deux connexions à baïonnette, l'inspection complète du connecteur est rendue possible. En effet, il est possible d'inspecter la bague de verrouillage et les éléments connecteurs mâle et femelle.

Les étapes de ce mode de réalisation correspondent aux étapes illustrées aux figures 6 (a) à (e) et (g) à (i), avec une différence pour l'étape (i), pour laquelle on utilise les embouts initiaux des lignes périphériques.

La figure 7 illustre, schématiquement et de manière non limitative, un connecteur obtenu par le procédé selon le troisième mode de réalisation. La figure 7 est une demi vue en coupe d'un connecteur selon ce mode de réalisation. Le connecteur comprend une bague de verrouillage de remplacement 11', qui comporte une série de tenons apte à coopérer avec une série de tenons 13 de l'élément connecteur femelle 8, et une série de tenons apte à coopérer avec une série de tenons 17 de l'élément connecteur mâle de remplacement 9'. La série de tenons 17 de l'élément connecteur mâle de remplacement 9' a une longueur axiale inférieure à la longueur des tenons 13 de l'élément connecteur femelle 8, de manière à avoir un encombrement similaire à l'épaulement de la bague de verrouillage initiale.

### Quatrième mode de réalisation

Pour ce quatrième mode de réalisation, on remplace uniquement la bague de verrouillage, et on modifie l'élément connecteur mâle initial. La modification de l'élément connecteur mâle consiste à former au moins une série de tenons à la place de l'épaulement existant. La série de tenons peut être formée par usinage de l'épaulement, par ajout de matière et/ou par ajout de tenons. La série de tenons de l'élément connecteur mâle modifié peut comprendre une ou deux rangées de tenons.

Ce mode de réalisation présente l'avantage de nécessiter une seule nouvelle pièce : la bague de verrouillage de remplacement.

Pour ce mode de réalisation, on peut mettre en oeuvre les étapes suivantes :
- on désassemble les équipements prévus sur la colonne montante, tels que les flotteurs, les lignes périphériques, les colliers de maintien et les plaques guides : à la fin de cette étape, le tronçon de colonne montante comporte uniquement le tube principal, les éléments connecteurs mâle et femelle, et la bague de verrouillage montée sur l'élément connecteur mâle,
- on découpe la bague de verrouillage : à la fin de cette étape, le tronçon de la colonne montante comporte le tube principal et les éléments connecteurs mâle et femelle,
- on forme au moins une série de tenons sur la surface extérieure de l'élément connecteur mâle, par exemple par usinage et/ou ajout de matière,
- on applique un traitement de surface à l'élément connecteur mâle modifié, par exemple un traitement anti-corrosion et un revêtement de surface de glissement,
- on assemble les plaques guides sur les éléments connecteurs mâle et femelle,
- on positionne la bague de verrouillage de remplacement sur l'élément connecteur mâle de remplacement ; la bague de verrouillage de remplacement comporte au moins une série de tenons sur sa surface intérieure qui coopère avec la série de tenons sur l'élément connecteur mâle modifié ; à la fin de cette étape, le tronçon comporte le tube principal, l'élément connecteur femelle, l'élément connecteur mâle de remplacement, les plaques guides et la bague de verrouillage de remplacement,
- on assemble les lignes périphériques avec les embouts de remplacement au moyen notamment des plaques guides, et
- on assemble les colliers de maintien et les flotteurs autour du tube principal et des lignes périphériques : à la fin de cette étape, le tronçon de colonne montante modifié est complet et peut être connecté à un autre tronçon de colonne montante au moyen de la bague de verrouillage de remplacement.

Ainsi, la bague de verrouillage de remplacement étant démontable par deux connexions à baïonnette, l'inspection complète du connecteur est rendue possible. En effet, il est possible d'inspecter la bague de verrouillage et les éléments connecteurs mâle et femelle.

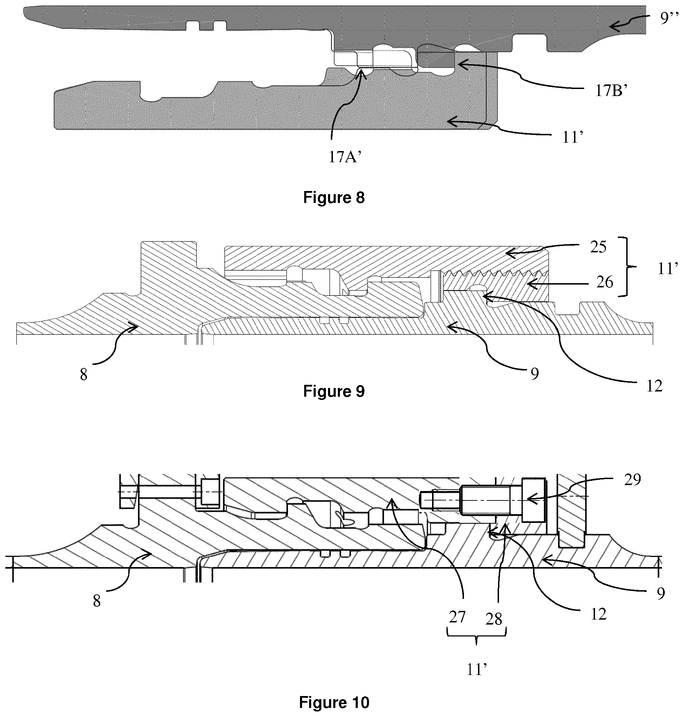

La figure 8 illustre, schématiquement et de manière non limitative, un connecteur obtenu par le procédé selon le quatrième mode de réalisation. La figure 8 est une demi vue en coupe d'un connecteur selon ce mode de réalisation, l'élément connecteur femelle n'étant pas représenté. L'élément connecteur mâle modifié 9" comporte deux rangées de tenons 17A' et 17B'. Sur cette figure, on illustre en nuance de gris une rangée de tenons 17B' formée par usinage, et en blanc une rangée de tenons 17A' formée par ajout de matière. Le connecteur comprend une bague de verrouillage de remplacement 11', qui comporte une série de tenons apte à coopérer avec une série de tenons de l'élément connecteur femelle, et une série de tenons (comprenant deux rangées de tenons) apte à coopérer avec une série de tenons 17A' et 17B' de l'élément connecteur mâle modifié 9".

### Cinquième mode de réalisation

Pour ce cinquième mode de réalisation, on remplace uniquement la bague de verrouillage. La bague de verrouillage de remplacement est alors formée de deux anneaux assemblés entre eux par filetage ou vissage. Une fois assemblée, la bague de verrouillage de remplacement a la forme extérieure et intérieure similaire à celle de la bague de verrouillage initiale : elle comporte d'une part une série de tenons apte à coopérer avec une série de tenons de l'élément connecteur femelle, et comporte d'autre part un épaulement apte à venir en butée contre un épaulement de l'élément connecteur mâle.

Selon une conception de ce cinquième mode de réalisation, un des deux anneaux de la bague de verrouillage peut être formé de deux parties, par exemple par deux demi-coquilles.

Ce mode de réalisation présente l'avantage de nécessiter le remplacement uniquement de la bague de verrouillage et sans modification des autres pièces du connecteur.

Pour ce mode de réalisation, on peut mettre en oeuvre les étapes suivantes :
- on désassemble les équipements prévus sur la colonne montante, tels que les flotteurs, les lignes périphériques, les colliers de maintien et les plaques guides, à la fin de cette étape : le tronçon de colonne montante comporte uniquement le tube principal, les éléments connecteurs mâle et femelle, et la bague de verrouillage montée sur l'élément connecteur mâle,
- on découpe la bague de verrouillage : à la fin de cette étape, le tronçon de la colonne montante comporte le tube principal et les éléments connecteurs mâle et femelle,
- on assemble les plaques guides sur les éléments connecteurs mâle et femelle,
- on positionne un premier anneau de la bague de verrouillage de remplacement en butée contre l'épaulement de l'élément connecteur mâle (le premier anneau peut être constitué de deux demi-coquilles assemblées, par exemple par vissage ou par clipsage), et on assemble les deux anneaux par vissage ou filetage ; le deuxième anneau de la bague de verrouillage de remplacement comporte au moins une série de tenons sur sa surface intérieure qui coopère avec la série de tenons sur l'élément connecteur femelle ; à la fin de cette étape, le tronçon comporte le tube principal, l'élément connecteur femelle, l'élément connecteur mâle de remplacement, les plaques guides et la bague de verrouillage de remplacement,
- on assemble les lignes périphériques avec les embouts de remplacement au moyen notamment des plaques guides, et
- on assemble les colliers de maintien et les flotteurs autour du tube principal et des lignes périphériques : à la fin de cette étape, le tronçon de colonne montante modifié est complet et peut être connecté à un autre tronçon de colonne montante au moyen de la bague de verrouillage de remplacement.

Ainsi, la bague de verrouillage de remplacement étant démontable par l'assemblage des deux anneaux, l'inspection complète du connecteur est rendue possible. En effet, il est possible d'inspecter la bague de verrouillage et les éléments connecteurs mâle et femelle.

La figure 9 illustre, schématiquement et de manière non limitative, une première variante d'un connecteur obtenu par le procédé selon le cinquième mode de réalisation. La figure 9 est une demi vue en coupe d'un connecteur selon ce mode de réalisation. L'élément connecteur mâle initial 9 comporte un épaulement 12. La bague de verrouillage de remplacement 11' comprend un premier anneau 26. Le premier anneau 26 comporte un épaulement en butée contre l'épaulement 12 de l'élément connecteur mâle 9. Le premier anneau 26 comporte une surface extérieure filetée, sur laquelle vient se fixer le deuxième anneau 25 de la bague de verrouillage de remplacement 11'. Le diamètre interne du premier anneau 26 est inférieur au diamètre interne du deuxième anneau 25.

La figure 10 illustre, schématiquement et de manière non limitative, une deuxième variante d'un connecteur obtenu par le procédé selon le cinquième mode de réalisation. La figure 10 est une demi vue en coupe d'un connecteur selon ce mode de réalisation. L'élément connecteur mâle initial 9 comporte un épaulement 12. La bague de verrouillage de remplacement 11' comprend un premier anneau 28. Le premier anneau 28 vient en butée contre l'épaulement 12 de l'élément connecteur mâle 9. La bague de verrouillage de remplacement 11' comprend un deuxième anneau 27 venant en appui sur le premier anneau 28. Le diamètre interne du premier anneau 28 est inférieur au diamètre interne du deuxième anneau 27. Les deux anneaux 27 et 28 sont assemblés par des vis, dont la direction est parallèle à l'axe de la colonne montante.

## Revendications

1. Procédé pour faire évoluer un connecteur (5) assemblant deux tronçons d'une colonne montante de forage, ledit connecteur (5) comprenant un premier tronçon de colonne montante, un deuxième tronçon de colonne montante, une bague de verrouillage non démontable (11), ledit premier tronçon de colonne montante étant formé par au moins un élément de tube principal (6) prolongé par un élément connecteur mâle (9), ledit deuxième tronçon étant formé par au moins un élément de tube principal (6) prolongé par un élément connecteur femelle (9), ledit élément connecteur mâle (9) coopérant avec ledit élément connecteur femelle (8) pour assembler lesdits deux tronçons (6), ladite bague de verrouillage (11) étant disposée autour desdits éléments connecteurs mâle (9) et femelle (8), **caractérisé en ce qu'**on réalise au moins les étapes suivantes, au moyen d'une bague de verrouillage de remplacement (11') démontable, ladite bague de verrouillage de remplacement (11') comportant une pluralité de tenons (20), lesdits tenons de ladite bague de verrouillage de remplacement (11') coopérant avec une pluralité de tenons (17) de l'élément connecteur mâle (9 ; 9' ; 9"), ou ladite bague de verrouillage de remplacement (11') étant formée par un assemblage vissé ou fileté d'au moins deux anneaux (25, 26 ; 27, 28) :
a) on découpe au moins un élément parmi ledit élément connecteur mâle (9) et/ou ladite bague de verrouillage (11), de manière à séparer ledit élément connecteur mâle (9) de ladite bague de verrouillage (11) ; et
b) on remplace au moins ladite bague de verrouillage (11) par ladite bague de verrouillage de remplacement (11').

2. Procédé selon la revendication 1, dans lequel, en outre, on remplace ledit élément connecteur mâle (9) dudit connecteur par un élément connecteur mâle de remplacement (9') comportant une série de tenons (17) sur sa surface extérieure.

3. Procédé selon la revendication 2, dans lequel on réalise les étapes suivantes :
i) on positionne l'élément connecteur mâle de remplacement (9') par rapport audit élément connecteur femelle (8) ; et
ii) on fixe ledit élément connecteur mâle de remplacement (9') audit élément de tube principal (6).

4. Procédé selon la revendication 3, dans lequel, préalablement à la fixation dudit élément connecteur mâle de remplacement (9') audit tube principal (6), on chanfreine ledit élément de tube principal (6).

5. Procédé selon la revendication 1, dans lequel on forme au moins une série de tenons (17) sur la surface extérieure dudit élément connecteur mâle (9").

6. Procédé selon la revendication 5, dans lequel on forme au moins une série de tenons (17) par usinage d'un épaulement (12) dudit élément connecteur mâle (9").

7. Procédé selon l'une des revendications 5 ou 6, dans lequel on forme au moins une série de tenons (17) par ajout de matière ou apport de tenons sur ledit élément connecteur mâle (9").

8. Procédé selon la revendication 1, dans lequel lorsque ladite bague de verrouillage de remplacement (11') est formée par un assemblage de deux anneaux (25, 26 ; 27, 28), on met en oeuvre les étapes suivantes :
i) on met en contact un épaulement d'un premier anneau (26 ; 28) avec un épaulement (12) dudit élément connecteur mâle (9) ; et
ii) on assemble lesdits anneaux (25, 26 ; 27, 28) par vissage ou filetage.

9. Procédé selon l'une des revendications précédentes, dans lequel on usine l'extrémité dudit élément connecteur femelle (8) afin d'obtenir une surface plane à ladite extrémité dudit élément connecteur femelle (8).

10. Procédé selon l'une des revendications précédentes, dans lequel lesdits éléments connecteurs mâle (9, 9', 9") et femelle (8) sont munis de moyens de guidage pour le passage respectif d'un premier et d'un deuxième élément de tube auxiliaire (7), et lesdits premier et deuxième éléments de tube auxiliaire (7) étant connectés entre eux par des moyens de connexion (21'), et ledit procédé comporte une étape de démontage et de remplacement desdits moyens de connexion (21') desdits tubes auxiliaires (7).

11. Procédé selon l'une des revendications précédentes, dans lequel on applique un traitement de surface sur ledit élément connecteur mâle (9, 9', 9") et/ou sur ledit élément connecteur femelle (8) et/ou sur ladite bague de verrouillage de remplacement (11').

12. Procédé selon l'une des revendications précédentes, dans lequel ledit procédé comporte une étape initiale de désassemblage d'au moins un équipement desdits tronçons de colonne montante, tels qu'un flotteur (22), un tube auxiliaire (7), un collier de maintien, ou une plaque guide (23).

13. Procédé selon l'une des revendications précédentes, dans lequel ledit procédé comporte une étape finale d'assemblage d'au moins un équipement desdits tronçons de colonne montante, tels qu'un flotteur (22), un tube auxiliaire (7), un collier de maintien, ou une plaque guide (23).

## Patentansprüche

1. Verfahren zur Entwicklung eines Verbinders (5), der zwei Abschnitte eines Bohrlochsteigrohrs verbindet, wobei der Verbinder (5) einen ersten Steigrohrabschnitt, einen zweiten Steigrohrabschnitt, einen nicht demontierbaren Verriegelungsring (11) umfasst, wobei der erste Steigrohrabschnitt von mindestens einem Hauptrohrelement (6) gebildet ist, das von einem Einsteckverbindungselement (9) verlängert ist, wobei der zweite Abschnitt von mindestens einem Hauptrohrelement (6) gebildet ist, der von einem Aufnahmeverbindungselement (9) verlängert ist, wobei das Einsteckverbindungselement (9) mit dem Aufnahmeverbindungselement (8) zusammenwirkt, um die zwei Abschnitte (6) zu verbinden, wobei der Verriegelungsring (11) um die Einsteck- (9) und Aufnahmeverbindungselemente (8) herum angeordnet ist, **dadurch gekennzeichnet, dass** mindestens die folgenden Schritte mit Hilfe eines demontierbaren Ersatzverriegelungsrings (11') durchgeführt werden, wobei der Ersatzverriegelungsring (11') eine Vielzahl von Zapfen (20) umfasst, wobei die Zapfen des Ersatzverriegelungsrings (11') mit einer Vielzahl von Zapfen (17) des Einsteckverbindungselements (9; 9'; 9") zusammenwirken, oder wobei der Ersatzverriegelungsring (11') von einer Schraub- oder Gewindeverbindung mindestens zweier Ringe (25, 26; 27, 28) gebildet ist:
a) Abschneiden mindestens eines Elements unter dem Einsteckverbindungselement (9) und/oder dem Verriegelungsring (11), um das Einsteckverbindungselement (9) von dem Verriegelungsring (11) zu trennen; und
b) Ersetzen mindestens des Verriegelungsrings (11) durch den Ersatzverriegelungsring (11').

2. Verfahren nach Anspruch 1, bei dem ferner das Einsteckverbindungselement (9) des Verbinders durch ein Ersatzeinsteckverbindungselement (9'), umfassend eine Reihe von Zapfen (17) auf seiner Außenfläche, ersetzt wird.

3. Verfahren nach Anspruch 2, bei dem die folgenden Schritte durchgeführt werden:
i) Positionieren des Ersatzeinsteckverbindungselements (9') in Bezug zum Aufnahmeverbindungselement (8); und
ii) Befestigen des Ersatzeinsteckverbindungselements (9') am Hauptrohrelement (6).

4. Verfahren nach Anspruch 3, bei dem vor der Befestigung des Ersatzeinsteckverbindungselements (9') am Hauptrohr (6) das Hauptrohrelement (6) abgeschrägt wird.

5. Verfahren nach Anspruch 1, bei dem mindestens eine Reihe von Zapfen (17) auf der Außenfläche des Einsteckverbindungselements (9") gebildet werden.

6. Verfahren nach Anspruch 5, bei dem mindestens eine Reihe von Zapfen (17) durch Bearbeitung eines Absatzes (12) des Einsteckverbindungselements (9") gebildet werden.

7. Verfahren nach einem der Ansprüche 5 oder 6, bei dem mindestens eine Reihe von Zapfen (17) durch Materialzugabe oder Beibringung von Zapfen auf das Einsteckverbindungselement (9") gebildet werden.

8. Verfahren nach Anspruch 1, bei dem, wenn der Ersatzverriegelungsring (11') durch eine Verbindung von zwei Ringen (25, 26; 27, 28) gebildet wird, die folgenden Schritte eingesetzt werden:
i) Inkontaktbringen eines Absatzes eines ersten Ringes (26; 28) mit einem Absatz (12) des Einsteckverbindungselements (9); und
ii) Verbinden der Ringe (25, 26; 27, 28) durch Schrauben oder durch ein Gewinde.

9. Verfahren nach einem der vorhergehenden Ansprüche, bei dem das Ende des Aufnahmeverbindungselements (8) bearbeitet wird, um eine ebene Fläche am Ende des Aufnahmeverbindungselements (8) zu erhalten.

10. Verfahren nach einem der vorhergehenden Ansprüche, bei dem die Einsteck- (9, 9', 9") und Aufnahmeverbindungselemente (8) mit Führungsmitteln für den Durchgang eines ersten bzw. eines zweiten Hilfsrohrelements (7) versehen sind, wobei die ersten und zweiten Hilfsrohrelemente (7) miteinander durch Anschlussmittel (21') verbunden sind, wobei das Verfahren einen Schritt der Demontage und des Ersatzes der Anschlussmittel (21') der Hilfsrohre (7) umfasst.

11. Verfahren nach einem der vorhergehenden Ansprüche, bei dem eine Oberflächenbehandlung an dem Einsteckverbindungselement (9, 9', 9") und/oder an de Aufnahmeverbindungselement (8) und/oder an dem Ersatzverriegelungsring (11') angewandt wird.

12. Verfahren nach einem der vorhergehenden Ansprüche, wobei das Verfahren einen Anfangsschritt der Demontage mindestens einer Ausrüstung der Steigrohrabschnitte, wie eines Schwimmers (22), eines Hilfsrohrs (7), einer Halteschelle oder einer Führungsplatte (23), umfasst.

13. Verfahren nach einem der vorhergehenden Ansprüche, wobei das Verfahren einen Endschritt der Montage mindestens einer Ausrüstung der Steigrohrabschnitte, wie eines Schwimmers (22), eines Hilfsrohrs (7), einer Halteschelle oder einer Führungsplatte (23), umfasst.

## Claims

1. A method for upgrading a connector (5) assembling two sections of a drilling riser, said connector (5) comprising a first riser section, a second riser section, a non-dismountable locking collar (11), said first riser section being made up of at least one main tube element (6) extended by a male connector element (9), said second section being made up of at least one main tube element (6) extended by a female connector element (8), said male connector element (9) cooperating with said female connector element (8) for assembling said two sections (6), said locking collar (11) being arranged around said male (9) and female (8) connector elements, **characterized in that** at least the following steps are carried out using a dismountable replacement locking collar (11'), said replacement locking collar (11') comprising a plurality of studs (20), said studs of said replacement locking collar (11') cooperating with a plurality of studs (17) of male connector element (9; 9'; 9"), or said replacement locking collar (11') consisting of a screwed or threaded assembly of at least two rings (25, 26; 27, 28):
a) cutting out at least one element among said male connector element (9) and/or said locking collar (11), so as to separate said male connector element (9) from said locking collar (11), and
b) replacing at least said locking collar (11) with said replacement locking collar (11').

2. A method as claimed in claim 1, wherein said male connector element (9) of said connector is further replaced by a replacement male connector element (9') comprising a series of studs (17) on the outer surface thereof.

3. A method as claimed in claim 2, wherein the following steps are carried out:
i) positioning replacement male connector element (9') relative to said female connector element (8), and
ii) fastening said replacement male connector element (9') to said main tube element (6).

4. A method as claimed in claim 3 wherein, prior to fastening said replacement male connector element (9') to said main tube (6), said main tube element (6) is beveled.

5. A method as claimed in claim 1, wherein at least one series of studs (17) is formed on the outer surface of said male connector element (9").

6. A method as claimed in claim 5, wherein at least one series of studs (17) is formed by machining a shoulder (12) of said male connector element (9").

7. A method as claimed in any one of claims 5 or 6, wherein at least one series of studs (17) is formed by material addition or by adding studs on said male connector element (9").

8. A method as claimed in claim 1 wherein, when said replacement locking collar (11') is made up of an assembly of two rings (25, 26; 27, 28), the following steps are carried out:
i) contacting a shoulder of a first ring (26; 28) with a shoulder (12) of said male connector element (9), and
ii) assembling said rings (25, 26; 27, 28) by screwing or threading.

9. A method as claimed in any one of the previous claims, wherein the end of said female connector element (8) is machined in order to obtain a plane surface at said end of said female connector element (8).

10. A method as claimed in any one of the previous claims, wherein said male (9, 9', 9") and female (8) connector elements are provided with guide means for respective passage of a first and of a second auxiliary pipe element (7), said first and second auxiliary pipe elements (7) being connected to one another by connection means (21'), and said method comprises a step of dismounting and replacing said connection means (21') of said auxiliary pipes (7).

11. A method as claimed in any one of the previous claims, wherein a surface treatment is applied onto said male connector element (9, 9', 9") and/or said female connector element (8) and/or said replacement locking collar (11').

12. A method as claimed in any one of the previous claims, wherein said method comprises an initial step of disassembling at least one equipment of said riser sections, such as a float (22), an auxiliary pipe (7), a clamp or a guide plate (23).

13. A method as claimed in any one of the previous claims, wherein said method comprises a final step of assembling at least one equipment of said riser sections, such as a float (22), an auxiliary pipe (7), a clamp or a guide plate (23).
